# EUROPÄISCHE PATENTANMELDUNG

(11) **EP 2 818 875 A1**
(43) Veröffentlichungstag der Anmeldung: **31.12.2014**
(21) Anmeldenummer: 13173955.9
(22) Anmeldetag: 27.06.2013
(51) Int. Cl.: G01P 13/02

(54) **Windrichtungsmessvorrichtung und Verfahren zur Windrichtungsmessung**

(71) Anmelder: Wilmers Messtechnik GmbH, 22089 Hamburg (DE)
(72) Erfinder: Weißgräber, Norbert, 20537 Hamburg (DE); Wilmers, Hans, 1383 Asker (NO); Wilmers, Walter, 21107 Hamburg (DE)
(74) Vertreter: Müller Verweyen

(57) **Zusammenfassung**

Eine Windrichtungsmessvorrichtung (10) umfasst einen Sockel (11), einen relativ zu dem Sockel (11) um mindestens eine Achse R drehbar gelagerten Windrichtungsrotor (12), der ein unter der Einwirkung von Windkräften sich in der Windrichtung ausrichtendes Strömungsmittel (15) aufweist, und einen Kompass (18) zur Ermittlung der Windrichtung relativ zu einer Bezugsrichtung des Erdmagnetfelds. Der Kompass (18) ist ein elektronischer Kompass, der als vollständige Einheit an dem Windrichtungsrotor (12) angebracht ist.

## Beschreibung

Die Erfindung betrifft eine Windrichtungsmessvorrichtung umfassend einen Sockel, einen relativ zu dem Sockel um mindestens eine Achse drehbar gelagerten Windrichtungsrotor, der ein unter der Einwirkung von Windkräften sich in der Windrichtung ausrichtendes Strömungsmittel aufweist, und einen Kompass zur Ermittlung der Windrichtung relativ zu einer Bezugsrichtung des Erdmagnetfelds. Die Erfindung betrifft des Weiteren ein Verfahren zur Windrichtungsmessung.

Die horizontale Windrichtung wird nach heutigem Stand der Technik mittels einer Fahne gemessen, die an einer vertikalen Achse drehbar gelagert ist. Aufgrund der Strömungskräfte richtet sich die Fahne parallel zur Windrichtung aus. Der Drehwinkel der Fahne wird elektronisch erfasst und an das Datenerfassungssystem übertragen. Als Drehwinkelgeber werden Potentiometer, Hall-Sensoren, GMR (Giant Magneto Resistance)-Sensoren, TMR (Tunnel Magneto Resistance)-Sensoren und optoelektronische Winkelencoder eingesetzt.

Die zur Zeit üblichen Messverfahren erfassen den Drehwinkel zwischen der Fahne und dem Gehäuse des Sensors. Von Interesse ist jedoch die auf den magnetischen Nordpol bezogene Windrichtung. Das Sensorgehäuse muss also entweder genau nach Norden ausgerichtet werden oder es muss die Ausrichtung des Gehäuses vermessen werden. Die Ausrichtung des Sensorgehäuses relativ zu Nord ist aufwändig und fehleranfällig. Die Ermittlung der Ausrichtung des Sensorgehäuses ist häufig schwierig und nur mit relativ geringer Genauigkeit möglich. Weiterhin kann sich im Laufe einer Messung die Ausrichtung des Sensorgehäuses beispielsweise unter dem Einfluss von Naturkräften verändern, beispielsweise infolge Verdrehung oder Verformung von Trägern für die Windrichtungsmessvorrichtung. Dies führt zu erheblichen Messunsicherheiten.

Bei Windmessung auf Bojen oder in Fahrt befindlichen Fahrzeugen bewegt sich das Sensorgehäuse ständig. Im Stand der Technik wird in diesem Fall die veränderliche Ausrichtung des Sensorgehäuses oder des Fahrzeugs gemessen und die Messergebnisse des Sensors werden entsprechend korrigiert.

Es wurde auch bereits vorgeschlagen, einen Kompass zur Ermittlung der Windrichtung relativ zu dem magnetischen Nordpol zu verwenden.

So offenbart DE 2 336 134 A1 eine Windrichtungsmessvorrichtung mit einem an einem Kompassrotor befestigten Magneten, der unabhängig von dem Windrichtungsrotor im Inneren des Sockelgehäuses drehbar aufgehängt ist und sich auf das Erdmagnetfeld einstellt. Der Gleitkontakt eines die Messeinrichtung bildenden Potentiometers ist mit dem Kompassrotor verbunden. Auf diese Weise soll erreicht werden, dass das von der Messeinrichtung bestimmte Messsignal jederzeit relativ zu dem magnetischen Nordpol bestimmt wird. Jedoch sind die Reibungskräfte zwischen dem Gleitkontakt und dem Widerstandselement des Potentiometers nicht klein im Verhältnis zu den vom Erdmagnetfeld ausgeübten Kräften, so dass ein erheblicher systematischer Messfehler auftritt und eine Messung mit ausreichender Genauigkeit kaum möglich ist.

US 3 387 491 offenbart eine Windrichtungsmessvorrichtung mit einem Windrichtungsrotor, einem auf dem Windrichtungsrotor drehbar montierten Windstärkerotor und einer unabhängig drehbar aufgehängten Kompassnadel zur Ermittlung der Windrichtung relativ zum magnetischen Nordpol. Die Konstruktion ist sehr aufwändig und daher störanfällig.

US 3 713 336 offenbart eine Windrichtungsmessvorrichtung mit einem Windrichtungsrotor und einem auf dem Windrichtungsrotor drehbar montierten Windstärkerotor. An dem Windrichtungsrotor ist eine Magnetfeldmessanordnung umfassend einen magnetischen Polschuh, eine Magnetodiode und ein hochpermeabler Magnetflusskollektor vorgesehen. An dem Windstärkerotor ist ein hochpermeabler magnetflusskonzentrierender Stab vorgesehen, der aufgrund der Rotation mit dem Windstärkerotor in der Magnetfeldmessanordnung ein sinusförmiges Signal erzeugt. Um daraus eine Information über die Ausrichtung des Windrichtungsrotors relativ zu dem magnetischen Nordpol zu gewinnen, ist an dem Windrichtungsrotor in der Ebene der Strömungsflosse ein permanentmagnetisches Bezugselement und an dem Windstärkerotor ein von dem Bezugselement einmal pro Umdrehung des Windstärkerotors betätigter Reedschalter vorgesehen. Der Kompass wird hier von der Magnetfeldmessanordnung mit dem magnetischen Polschuh, der Magnetodiode und dem Magnetflusskollektor, dem Windstärkerotor mit dem magnetflusskonzentrierenden Stab und dem Reedschalter sowie dem permanentmagnetischen Bezugselement gebildet. Diese komplexe Kompassanordnung umfasst eine Vielzahl von sich teilweise gegeneinander bewegenden Teilen und ist daher aufwändig und störanfällig.

Bei Verwendung eines Kompasses zur Bestimmung der Windrichtung relativ zum magnetischen Nordpol tritt zusätzlich das Problem auf, dass die Windrichtungsmessvorrichtungen häufig auf einem Träger montiert sind, der überwiegend oder vollständig aus ferromagnetischem Metall besteht. Windrichtungsmessvorrichtungen sind in einer typischen Anwendung auf einem seitlichen Ausleger an einem Feldmast angebracht. Dies sind in der Regel Stahlgitterkonstruktionen, die zu einer Verzerrung des erdmagnetischen Feldes und somit zu einem nicht unerheblichen systematischen Messfehler führen. Des Weiteren können ferromagnetische Teile innerhalb der Windrichtungsmessvorrichtung zu einer Verzerrung des erdmagnetischen Feldes beitragen.

Aus den zuvor genannten Gründen hat sich die Verwendung eines Kompasses zur Ermittlung der Windrichtung relativ zu dem magnetischen Nordpol in der Praxis nicht durchgesetzt.

Die Aufgabe der Erfindung besteht darin, eine Windrichtungsmessvorrichtung und ein Windrichtungsmessverfahren bereitzustellen, die mit einfachen Mitteln eine genaue Bestimmung der Windrichtung relativ zum magnetischen Nordpol unabhängig von ihrer Ausrichtung ermöglichen.

Die Erfindung löst diese Aufgabe mit den Merkmalen der unabhängigen Ansprüche. Die Erfindung zeichnet sich dadurch aus, dass ein elektronischer Kompass als vollständige Einheit an dem Windrichtungsrotor angebracht ist. Der gesamte Kompass dreht sich daher ständig mit dem Windrichtungsrotor mit und ermöglicht eine direkte Messung der Ausrichtung des Windrichtungsrotors relativ zur erdmagnetischen Nordrichtung. Vollständige Einheit bedeutet, dass allein mittels der rotierenden Kompasseinheit eine Bestimmung der Ausrichtung des Windrichtungsrotors relativ zum magnetischen Nordpol möglich ist. Hierdurch unterscheidet sich die Erfindung beispielsweise von dem Stand der Technik gemäß US 3 713 336, wo nur Teile des Kompasses an dem Windrichtungsrotor angebracht sind, die Bestimmung der Ausrichtung relativ zum magnetischen Nordpol jedoch nur indirekt unter Zuhilfenahme weiterer, am Sockel angeordneter Kompassteile möglich ist.

Ein elektronischer Kompass im Sinne der Erfindung umfasst einen magnetoelektrischen Wandler (magnetoelectric transducer), der ein vom Erdmagnetfeld abhängiges elektrisches Signal erzeugt und somit die Bestimmung einer vom Erdmagnetfeld abhängigen Bezugsrichtung, insbesondere der Richtung des magnetischen Nordpols, ermöglicht. Der magnetoelektrische Wandler ist vorzugsweise ein Halbleiterelement, insbesondere ein Hall-Sensor oder ein magnetoresistives Element. Der elektronische Kompass kommt vorteilhaft ohne bewegliche Teile aus und ist daher äußerst robust.

Vorzugsweise umfasst die Windrichtungsmessvorrichtung einen an dem Windrichtungsrotor angebrachten gyroskopischen Sensor, der als Trägheitssensor von dem erdmagnetischen Feld nicht beeinflusst wird. Es handelt sich insbesondere um einen Drehratensensor, der die Winkelgeschwindigkeit des Windrichtungsrotors misst. Bevorzugt ist ein kostengünstiger mikromechanischer bzw. MEMS-Drehratensensor. Aus der Winkelgeschwindigkeit kann auf einfache Weise die Drehwinkeländerung des Windrichtungsrotors ermittelt werden. Vorteilhaft werden die vom gyroskopischen Sensor erfassten Drehwinkeländerungen mit den vom Kompass erfassten Drehwinkeländerungen verglichen. Idealerweise sind die von dem Kompass dem gyroskopischen Drehratenänderungen exakt gleich, Abweichungen können mithilfe einer Korrekturmatrix kompensiert werden. Durch diesen Vergleich bzw. eine entsprechende Verknüpfung der Messsignale können Inhomogenitäten bzw. Verzerrungen des Erdmagnetfelds, die beispielsweise von ferromagnetischen Teilen innerhalb oder in der Nähe der Windrichtungsmessvorrichtung hervorgerufen werden, kompensiert werden.

Die Erfindung ist nicht auf reine Windrichtungsmessvorrichtungen beschränkt, sondern beispielsweise auch auf kombinierte Windrichtungs- und -geschwindigkeitsmessvorrichtungen (Anemometer) anwendbar.

Die Erfindung ist des Weiteren nicht auf Drehung des Windrichtungsrotors um eine vertikale Achse beschränkt, sondern beispielsweise auch auf Rotation um zwei oder drei Achsen, etwa im Falle einer kardanischen Aufhängung des Windrichtungsrotors, anwendbar. Im allgemeinen Fall einer 3-dimensionalen Ausrichtung des Windrichtungsrotors kann es erforderlich sein, den Neigungswinkel zu kompensieren. Hierzu kann der Neigungswinkel durch die Messung der Erdbeschleunigung mittels eines entsprechenden Trägheitssensors bestimmt werden. Eine automatische Kalibrierung ist auch hier durch gleichzeitige Messung mit gyroskopischen Sensoren möglich.

Die Erfindung wird im Folgenden anhand bevorzugter Ausführungsformen unter Bezugnahme auf die beigefügten Figuren erläutert. Dabei zeigt:
- Fig. 1: eine Querschnittsansicht einer erfindungsgemäßen Windrichtungsmessvorrichtung in einer Ausführungsform;
- Fig. 2: eine schematische Darstellung einer in einer erfindungsgemäßen Windrichtungsmessvorrichtung angeordneten Sensoreinheit; und

- Fig. 3: eine Querschnittsansicht einer Windrichtungsmessvorrichtung nach dem Stand der Technik.

Die Windrichtungsmessvorrichtung 10 umfasst einen Sockel 11, der zur Montage auf einem nicht gezeigten Träger eingerichtet ist. Die Windrichtungsmessvorrichtung 10 wird beispielsweise auf einem seitlichen Ausleger an einem vertikalen Messmast im Feld angebracht. Andere Anwendungen, beispielsweise auf Fahrzeugen, sind möglich.

An dem Sockel 11 ist ein um eine insbesondere vertikale Achse R drehbar gelagerter Windrichtungsrotor 12 angebracht. Der Windrichtungsrotor 12 weist einen Rotorkörper 25 und eine Welle 13 auf, die in zwei an dem Sockel 11 angebrachten Drehlagern 14 gelagert ist. Alternativ kann die Welle 13 an dem Sockel 11 und die Drehlager 14 an dem Windrichtungsrotor 12 angebracht sein.

An dem Windrichtungsrotor 12 ist ein Strömungsmittel 15 vorgesehen, das unter dem Einfluss von Windkräften eine Selbstausrichtung des Windrichtungsrotors 12 parallel zu der Windrichtung bewirkt. Das Strömungsmittel 15 ist insbesondere eine versetzt zur Rotationsachse R angeordnete (Wind-)Fahne. Auf der der Fahne 15 gegenüberliegenden Seite der Rotationsachse R ist in der Ebene der Fahne 15 ein Ausgleichsgewicht 16 mit einer entgegen der Windrichtung zeigenden kegelförmigen Spitze montiert, so dass der Schwerpunkt des Windrichtungsrotors 12 etwa auf der Rotationsachse R liegt.

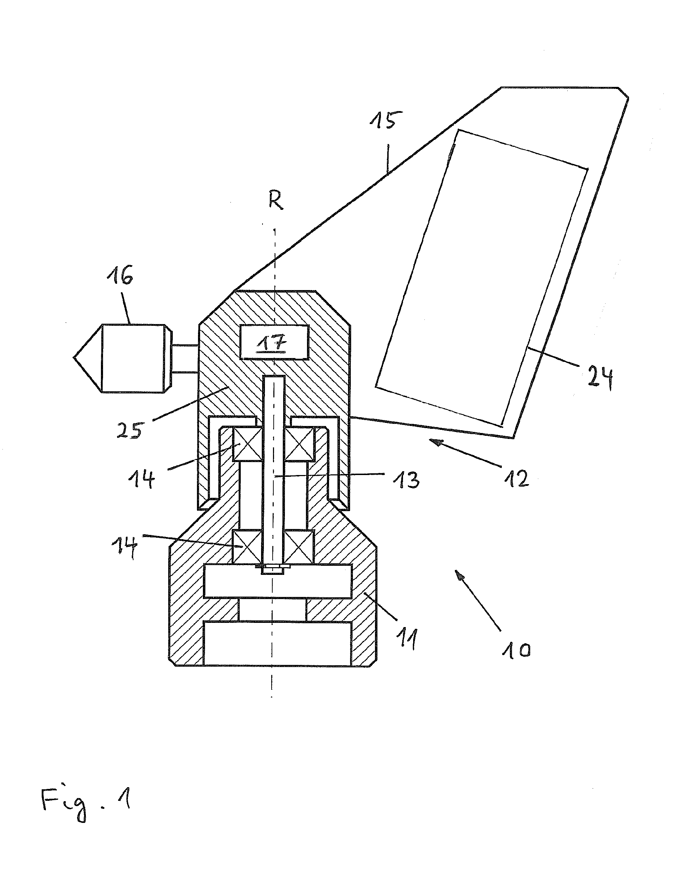

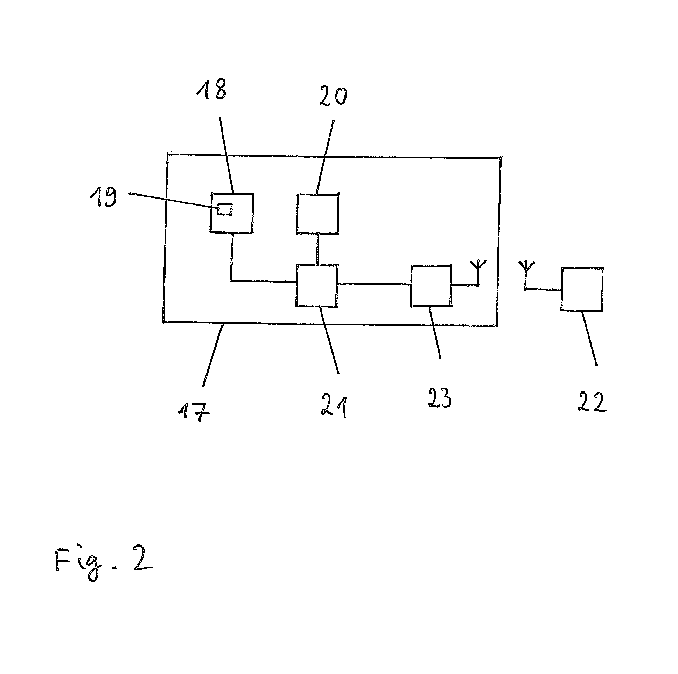

Fest mit dem Windrichtungsrotor 12 verbunden ist eine elektronische Sensoreinheit 17. In der Ausführungsform gemäß Figur 1 ist die Sensoreinheit 17 vorteilhaft an bzw. in dem Rotorkörper 25 angeordnet. Alternativ ist eine Anordnung an dem vom Rotorkörper 25 entfernten Ende der Welle 13 oder an bzw. in dem Strömungsmittel 15 nicht ausgeschlossen. Die Sensoreinheit 17, die genauer in Figur 2 gezeigt ist, umfasst einen elektronischen Kompass 18, der einen für das Erdmagnetfeld empfindlichen Hall-Sensor 19 aufweist, und einen gyroskopischen Sensor 20, insbesondere einen mikromechanischen Drehratensensor, der so angeordnet ist, dass er die Drehrate des Windrichtungsrotors 12 um die Rotationsachse R erfasst. Die Sensoreinheit 17 weist einen digitalen Signalprozessor 21 auf, der die von den Sensoren 18, 19, 20 ausgegebenen Signale verarbeitet und zur Übermittlung an ein Empfangsgerät 22 ausgibt. Das Empfangsgerät 22 kann beispielsweise ein Datenlogger sein, in dem die gemessenen Daten gespeichert und auf geeignete Weise zu einer entfernten Datenverarbeitungsstation übertragen werden. Die Übermittlung der Daten von der Sensoreinheit 17 zu dem Empfangsgerät 22 erfolgt vorzugsweise drahtlos bzw. per Funk mittels eines in der Sensoreinheit 17 angeordneten Funkmoduls 23 und einem in dem Empfangsgerät 22 angeordneten entsprechenden Funkmodul. In der Sensoreinheit 17 kann ein elektronischer Speicher zum Zwischenspeichern der von dem Kompass 18 und dem gyroskopischen Sensor 20 gemessenen Daten vorgesehen sein. Der elektronische Speicher kann beispielsweise in dem Signalprozessor 21 realisiert sein.

Der gesamte Kompass 18 dreht sich mit dem Windrichtungsrotor 12 mit und bestimmt fortlaufend die Richtung des Windrichtungsrotors 12, und somit die Windrichtung, relativ zum magnetischen Nordpol ohne Verwendung sich bewegender Teile und ohne Bezugnahme auf am Sockel 11 angeordnete Bezugsmittel. Der Kompass ist dabei direkt auf das Erdmagnetfeld empfindlich, im Gegensatz beispielsweise zu dem Stand der Technik gemäß US 3 713 336, wo eine indirekte Messung des durch einen hochpermeablen magnetflusskonzentrierenden, mit einem Windstärkerotor rotierenden Stab vermittelten und verstärkten Erdmagnetfelds erfolgt.

Die von dem Kompass 18 und dem gyroskopischen Sensor 20 gemessenen Daten werden an den Signalprozessor 21 ausgegeben und dort weiterverarbeitet. Insbesondere wird die von dem gyroskopischen Sensor 20 gemessene Drehrate zur Kompensation von Inhomogenitäten bzw. Verzerrungen des Erdmagnetfelds verwendet. Dies geschieht zweckmäßigerweise durch einen Vergleich und/oder eine geeignete Verknüpfung der Messsignale des elektronischen Kompasses 18 und des gyroskopischen Sensors 20. Dies kann auf unterschiedliche Weisen geschehen. Beispielsweise kann der Abgleich der beiden Bewegungen ständig durchgeführt werden, so dass der Kompass 18 laufend anhand der Messung des gyroskopischen Sensors 20 kalibriert wird. Es ist auch möglich, nur von Zeit zu Zeit, insbesondere in regelmäßigen Zeitabständen, eine Kalibrierung der Kompassdaten anhand der gyroskopischen Daten durchzuführen. Alternativ können auch die Messdaten des gyroskopischen Sensors 20 als Windrichtungsdaten verwendet werden, die anhand der Kompassdaten fortlaufend oder von Zeit zu Zeit kalibriert werden.

Die Datenverarbeitung, insbesondere die Verknüpfung der Signale von dem Kompass 18 und dem gyroskopischen Sensor 20, kann auch in einer externen Auswerteeinheit, beispielsweise in dem Datenlogger 22 erfolgen. In diesem Fall werden die Signale von dem Kompass 18 und dem gyroskopischen Sensor 20 beispielsweise unverarbeitet an den Datenlogger 22 gesendet.

Die Energieversorgung der Sensoreinheit 17 kann vorteilhaft durch eine an dem Windrichtungsrotor 12 angebrachte autonome Energiequelle, beispielsweise ein Solarmodul 24 (siehe Figur 1) oder ein Energy-Harvesting-System erfolgen. In diesem Fall ist in dem Windrichtungsrotor 12 vorzugsweise ein Zwischenspeicher, insbesondere ein Super-Kondensator oder ein Akkumulator zur Zwischenspeicherung der erzeugten Energie vorgesehen. Es ist aber auch eine an bzw. in dem Sockel 11 angebrachte Energieversorgung, beispielsweise eine Windturbine, oder eine externe Energieversorgung möglich. In diesem Fall wird die elektrische Energie beispielsweise per Induktion oder über Schleifkontakte zu dem Windrichtungsrotor 12 bzw. der Sensoreinheit 17 übertragen.

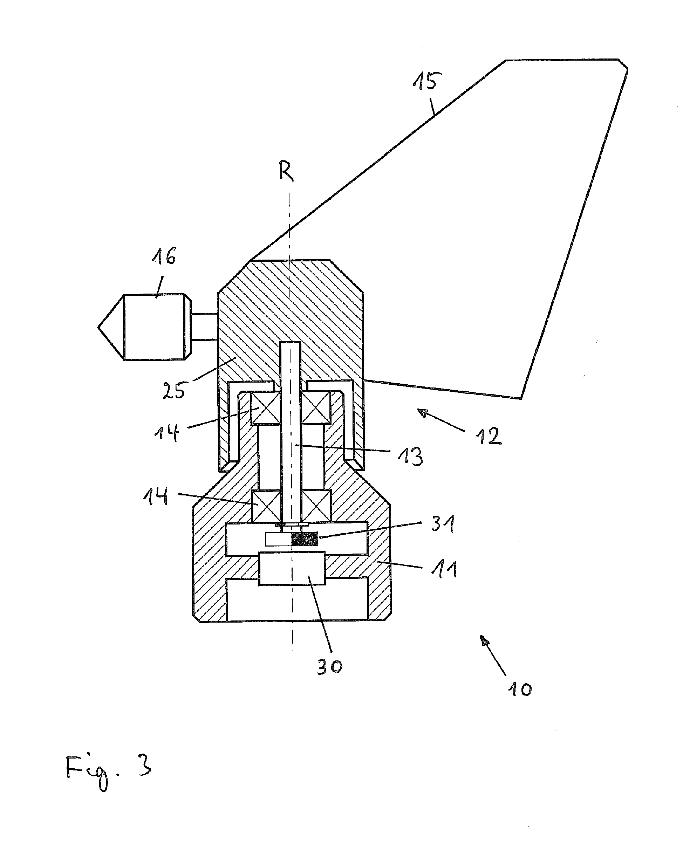

Eine verbreitete Ausführungsform des Standes der Technik ist in Figur 3 gezeigt. Hier ist ein fest mit dem Sockel 11 verbundener, magnetfeldsensitiver Drehwinkelencoder bzw. Drehwinkelsensor 30 und ein mit dem Windrichtungsrotor 12, hier am entfernten Ende der Welle 13, verbundener Magnet 31 vorgesehen. Der Sensor 30 misst somit den Winkelversatz zwischen dem Windrichtungsrotor 12 und dem feststehenden Sockel 11. Um daraus die Windrichtung relativ zum magnetischen Nordpol ermitteln zu können, muss entweder der Sockel 11 relativ zu magnetisch Nord ausgerichtet werden oder es muss die Ausrichtung des Sockels 11 relativ zu magnetisch Nord gemessen werden.

## Patentansprüche

1. Windrichtungsmessvorrichtung (10) umfassend einen Sockel (11), einen relativ zu dem Sockel (11) um mindestens eine Achse R drehbar gelagerten Windrichtungsrotor (12), der ein unter der Einwirkung von Windkräften sich in der Windrichtung ausrichtendes Strömungsmittel (15) aufweist, und einen Kompass (18) zur Ermittlung der Windrichtung relativ zu einer Bezugsrichtung des Erdmagnetfelds, **dadurch gekennzeichnet, dass** der Kompass (18) ein elektronischer Kompass ist, der als vollständige Einheit an dem Windrichtungsrotor (12) angebracht ist.

2. Windrichtungsmessvorrichtung nach Anspruch 1, **dadurch gekennzeichnet, dass** die Windrichtungsmessvorrichtung (10) einen an dem Windrichtungsrotor (12) angebrachten gyroskopischen Sensor (20) umfasst.

3. Windrichtungsmessvorrichtung nach einem der vorangehenden Ansprüche, umfassend einen digitalen Signalprozessor (21), der zur Kompensation von Inhomogenitäten des Erdmagnetfelds durch Vergleich und/oder Verknüpfung der Messsignale des elektronischen Kompasses (18) und des gyroskopischen Sensors (20) eingerichtet ist.

4. Windrichtungsmessvorrichtung nach einem der vorangehenden Ansprüche, **dadurch gekennzeichnet, dass** die Windrichtungsmessvorrichtung (10) ein Funkmodul (23) zur drahtlosen Übertragung von Messdaten an einen Empfänger (22) umfasst.

5. Windrichtungsmessvorrichtung nach Anspruch 4, **dadurch gekennzeichnet, dass** das Funkmodul (23) an dem Windrichtungsrotor (12) angebracht ist.

6. Windrichtungsmessvorrichtung nach einem der vorangehenden Ansprüche, **dadurch gekennzeichnet, dass** die Windrichtungsmessvorrichtung (10) eine an dem Windrichtungsrotor (12) angebrachte autonome Energiequelle (24) umfasst.

7. Windrichtungsmessvorrichtung nach Anspruch 6, **dadurch gekennzeichnet, dass** die Energiequelle ein insbesondere an dem Strömungsmittel angebrachtes Solarmodul (24) oder ein Energy-Harvesting-System ist.

8. Verfahren zur Windrichtungsmessung unter Verwendung einer Windrichtungsmessvorrichtung nach einem der vorangehenden Ansprüche.

9. Verfahren nach Anspruch 8, **dadurch gekennzeichnet, dass** eine Kompensation von Inhomogenitäten des Erdmagnetfelds durch Vergleich und/oder Verknüpfung der Messsignale des elektronischen Kompasses und des gyroskopischen Sensors durchgeführt wird.

10. Verfahren nach Anspruch 9, **dadurch gekennzeichnet, dass** Unterschiede in den von dem Kompass und dem gyroskopischen Sensor ermittelten Drehratenänderungen mittels einer Korrekturmatrix kompensiert werden.
